# EUROPÄISCHE PATENTANMELDUNG

(11) **EP 0 641 137 A2**
(43) Veröffentlichungstag der Anmeldung: **01.03.1995**
(21) Anmeldenummer: 94112939.7
(22) Anmeldetag: 18.08.1994
(51) Int. Cl.: H04Q 7/38, H04Q 7/32

(54) **Verfahren und Anordnung zum Beschränken des Zugriffs zu einem Mobilfunksystem**

(30) Priorität: 27.08.1993 DE 4328914
(71) Anmelder: SIEMENS AKTIENGESELLSCHAFT, D-80333 München (DE)
(72) Erfinder: Englberger, Ferdinand, Dr., D-82152 Planegg (DE); Lanig, Eva-Maria, Dipl.-Phys., D-81541 München (DE)

(57) **Zusammenfassung**

Zum Beschränken des Zugriffs von Mobilstationen (MS) zu einem Mobilfunksystem mit einer Mehrzahl von Mobilstationen (MS), wobei das Funkgebiet eine Mehrzahl von Lokalisierungsflächen (LA) aufweist und wobei bei einer Dienstanforderung durch die Mobilstation (MS) eine Authentifizierung der Mobilstation (MS) erfolgt, wird eine die jeweilige Lokalisierungsfläche (LA) kennzeichnende aktuelle Lokalisierungsidentifikation (LAIa) zur Mobilstation (MS) übertragen und dort gespeichert. In einem Identifikationsmodul (SIM) ist eine Lokalisierungsidentifikation (LAI) von mindestens einer für die Mobilstation (MS) zugelassenen Lokalisierungsfläche (LA) gespeichert. Die aktuelle Lokalisierungsidentifikation (LAIa) wird mit den dort gespeicherten Lokalisierungsidentifikationen (LAI) verglichen und es wird bei Nicht-Übereinstimmung ein Zugriff zum Mobilfunksystem gesperrt.

## Beschreibung

Die Erfindung bezieht sich auf ein Verfahren zum Beschränken des Zugriffs zu einem Mobilfunksystem gemäß dem Oberbegriff des Patentanspruchs 1. Weiterhin bezieht sich die Erfindung auf eine Mobilstation zum Durchführen des Verfahrens, sowie auf eine zugehörige Berechtigungskarte.

Bei einem Mobilfunksystem ist üblicherweise eine zu versorgende Fläche in eine große Anzahl von Funkzellen eingeteilt. In diesen Funkzellen sind jeweils Basisfunkstationen vorgesehen, über die die Verbindungen zwischen einem öffentlichen Telefonnetz und den Mobilstationen der einzelnen Teilnehmer in der jeweiligen Zelle hergestellt werden können. Ein derartiges Mobilfunksystem ist beispielsweise das vom European Telecommunication Standards Institute (ETSI) standardisierte GSM (Global System for Mobile Communication). Ein ähnliches System ist das DCS 1800/PCN. Eine Funkzelle ist die kleinste Servicefläche für Rufe von und zu der Mobilstation. Innerhalb einer Funkzelle wird für eine ausreichende Empfangsqualität gesorgt.

Eine oder mehrere Funkzellen bilden eine sogenannte Lokalisierungsfläche. Eine Lokalisierungsfläche ist eine Servicefläche, in der sich ein Mobilfunkteilnehmer bewegen kann, ohne daß ein Lokalisierungsregister jeweils auf den neuesten Stand gebracht werden muß. Die Größe der Lokalisierungsfläche wird vom Netzbetreiber festgelegt, um den Erfordernissen des Verkehrsaufkommens und der Bewegungsdichte Rechnung zu tragen.

Eine oder mehrere Lokalisierungsflächen bilden eine Besucherdatei-Fläche. Diese Besucherdatei-Fläche ist derjenige Teil eines Netzes, der von einer Besucherdatei unterstützt wird und kann die Größe eines Teils einer Stadt bis zur Größe eines ganzen Landes annehmen.

Eine oder mehrere Besucherdatei-Flächen bilden eine PLMN(Public Land Mobile Network)-Fläche. Eine PLMN-Fläche ist die geographische Servicefläche, in der ein Netzbetreiber seine Telekommunikationsdienste bereitstellt.

Mobilfunkteilnehmer können sich üblicherweise in der gesamten PLMN-Fläche bewegen und die angebotenen Telekommunikationsdienste in Anspruch nehmen. In einer Heimatdatei und gegebenenfalls in einer Besucherdatei einer Vermittlungsstelle werden die die entsprechenden Mobilfunkteilnehmer betreffenden Daten gespeichert, so daß die Mobilfunkteilnehmer in der gesamten PLMN-Fläche erreicht werden können, unabhängig davon, in welcher Funkzelle sie sich gerade befinden. Die Vermittlungsstelle ist außerdem mit einem Authentifikationszentrum verbunden.

Die Vermittlungsstelle stellt ein Bindeglied zwischen dem öffentlichen Ferrnsprechnetz und den Basisfunkstationen her, wobei zwischen der Vermittlungsstelle und den Basisfunkstationen Basisstationssteuerungen vorgesehen sind, die jeweils eine oder mehrere Basisfunkstationen steuern. Die Besucherdatei speichert Informationen über diejenigen Mobilfunkteilnehmer, die sich gerade in der jeweiligen Besucherdatei-Fläche befinden, und die Heimatdatei speichert alle den Mobilfunkteilnehmer betreffende Daten, die gegebenenfalls an die Besucherdatei weitergegeben werden. Diese Daten sind unter anderem eine internationale Identifikationsnummer und Authentifikationsdaten. Das Authentifikationszentrum speichert die Schlüssel, die erforderlich sind, um zu prüfen, ob ein Mobilfunkteilnehmer berechtigt ist, das Netz zu benutzen. Auf Wunsch der Heimatdatei erzeugt es die Authentifizierungsparameter, wie eine Zufallszahl, eine sogenannte individuelle Antwort (Signed Response SRES) und die Ver- und Entschlüsselungsparameter. Alle Authentifizierungsparameter sind einmalig und einem Mobilfunkteilnehmer zugeordnet. Die Zufallszahl und die individuelle Antwort werden nur jeweils einmal für einen Authentifizierungsvorgang benutzt und die im Authentifikationszentrum erzeugte individuelle Antwort wird in der Besucherdatei während der Authentifizierung mit einer individuellen Antwort verglichen, die in einem Identifikationsmodul in der Mobilstation erzeugt wird.

Aus der DE 36 38 735 A1 ist es bekannt, die Mobilstationen eines Mobilfunksystems sowohl mit Festspeichern zur Aufnahme unveränderlicher gerätespezifischer Informationen als auch mit programmierbaren Speichern zur Aufnahme von aktualisierungsbedürftigen gerätetechnischen Informationen auszurüsten. Beide Informationen werden miteinander verknüpft und während eines Identifizierungsvorgangs zu einer Zentralstation des Mobilfunksystems übertragen.

Weiterhin ist aus der DE 27 09 855 A1 ein Fernsprech- und Datennetz für Mobilstationen bekannt, bei dem neben der Rufnummer einer jeden Mobilstation auch die seinem jeweiligen Standort entsprechende Kennzahl gespeichert wird.

Obwohl die Mobilfunkteilnehmer sich im gesamten Netz bewegen können, kann es wünschenswert sein, die Zugriffsberechtigung von Mobilstationen zu beschränken. Beispielsweise kann in einem Ferienhaus oder einer Berghütte, die mit Telefonleitungen nur sehr schwer zu erreichen sind, eine Mobilstation vorgesehen sein, die nur in dieser Lokalisierungsfläche betrieben werden soll. Entsprechendes kann für Mitarbeiter von Firmen, z.B. Baufirmen oder für Wartungsleute gelten, die nur in einem bestimmten Gebiet tätig sind.

Der Erfindung liegt daher die Aufgabe zugrunde, ein Verfahren anzugeben, bei dem mit einem geringen Aufwand eine Beschränkung der Mobilität von Mobilstationen erreicht wird. Weiterhin liegt der Erfindung die Aufgabe zugrunde, eine entsprechende Mobilstation und eine zugehörige Berechtigungskarte anzugeben.

Erfindungsgemäß wird die Aufgabe bei dem Verfahren, der Mobilstation und der Berechtigungskarte der eingangs genannten Art durch die in den kennzeichnenden Teilen der Patentansprüche 1, 5 und 9 angegebenen Merkmale gelöst. Weiterbildungen der Erfindung ergeben sich aus den Unteransprüchen.

Die Erfindung bietet den Vorteil, daß die Verwaltung bestimmter Mobilfunkteilnehmer stark vereinfacht werden kann, wenn diese nur in einem bestimmten Gebiet oder in bestimmten Gebieten Zugang zum Mobilfunknetz haben. Damit kann diesen Mobilfunkteilnehmern auch in den Benutzergebühren entgegengekommen werden. Weiterhin hat die Erfindung den Vorteil, daß die Zugriffsberechtigung ohne jede Änderung der Mobilstation und der Vermittlungsstelle erfolgen kann.

Ein Ausführungsbeispiel der Erfindung wird im folgenden anhand von Zeichnungen näher erläutert. Es zeigen:
- Fig. 1: ein Blockbild eines Mobilfunksystems,
- Fig. 2: eine schematische Darstellung von Serviceflächen in einem Mobilfunksystem,
- Fig. 3: eine schematische Darstellung einer Aktualisierung der Lokalisierungsidentifikation, und
- Fig. 4: eine schematische Darstellung einer in einer Mobilstation verwendbare Berechtigungskarte.

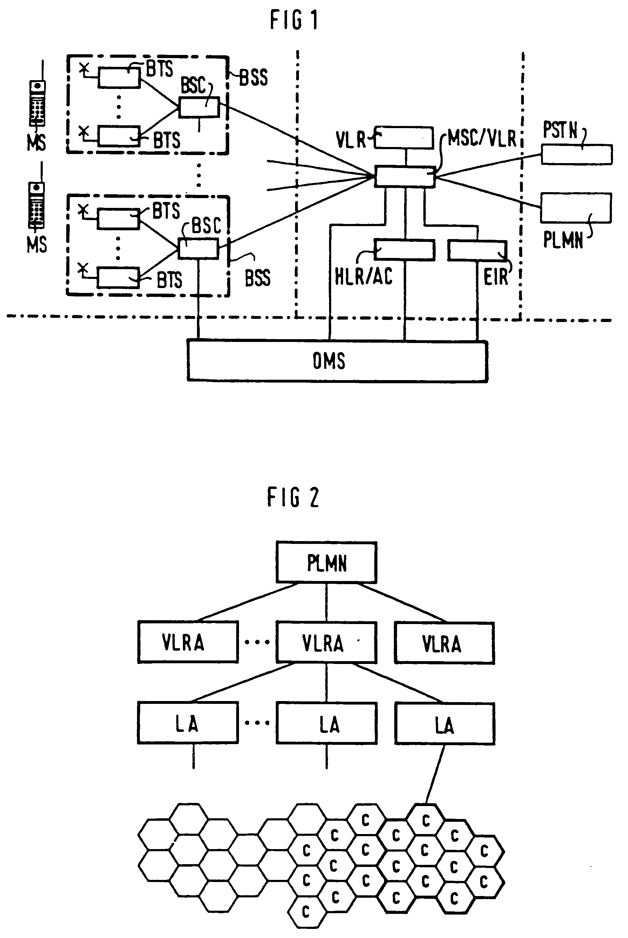

Das in Fig. 1 dargestellte Mobilfunksystem ist auf der Basis eines elektronischen Vermittlungssystems ausgebildet. Es enthält mehrere Systemeinheiten, nämlich ein Vermittlungssystem SSS, ein Funksystem RSS, und ein Bedien- und Wartungssystem OMS. Das Vermittlungssystem SSS stellt die Verbindung zwischen dem Funksystem RSS und einem öffentlichen Telefonnetz PSTN, beispielsweise einem ISDN-Netz, oder mit einem anderen mobilen Netz PLMN her. Das Funksystem RSS wird eingeteilt in Basisstationen BSS und mehrere Mobilstationen MS. Die Basisstationen BSS stellen alle Funktionen zur Verfügung, die erforderlich sind, um eine Funkdeckung von Zellen zu gewährleisten und die Mobilstationen MS stellen alle Funktionen für den Teilnehmer bereit. Jede Basisstation BSS umfaßt eine Basisstationssteuerung BSC, die alle Funktionen für die Funkübertragung durchführt, lokale Vorgänge bearbeitet und Wartungsfunktionen ausführt und eine oder mehrere Basisfunkstationen BTS. Eine Basisstationssteuerung BSC verwaltet eine Vielzahl von Basisfunkstationen BTS. Die Basisfunkstationen BTS führen alle funktechnischen Funktionen aus und sie unterstützen die Funkschnittstelle zu den Mobilstationen MS. Eine Basisfunkstation BTS versorgt eine oder mehrere Zellen. Ein derartiges System ist beispielsweise in einer Broschüre "D 900 Mobile Communication System" SYD der Siemens AG beschrieben.

Das Vermittlungssystem SSS enthält neben einer Mobil-Vermittlungsstelle MSC (Mobile Services Switching Center) eine mit dieser verbundene Heimatdatei HLR (Home Location Register) des Mobilfunkteilnehmers, eine Besucherdatei VLR (Vistor Location Register) und ein Geräte-Identifizierungsregister EIR (Equipment Identification Register). Die Heimatdatei HLR ist außerdem mit einem Authentifikationszentrum AC (Authentification Center) verbunden. Die Besucherdatei VLR speichert Informationen über diejenigen Mobilstationen MS, die sich gerade in der jeweiligen Besucherdatei-Fläche (Visitor Location Register Area) VLRA befinden und die Heimatdatei HLR speichert alle die Mobilstation MS betreffenden Daten, die gegebenenfalls an die Besucherdatei VLR weitergegeben werden. Diese Daten sind unter anderem eine internationale Identifikationsnummer und Authentifikationsdaten. Das Authentifikationszentrum AC speichert die Schlüssel, die erforderlich sind, um zu prüfen, ob eine Mobilstation MS berechtigt ist, das Mobilfunknetz zu benutzen. Auf Wunsch der Heimatdatei HLR erzeugt es die Authentifizierungsparameter, wie eine Zufallszahl, eine individuelle Antwort, die auch als Signed Response SRES bezeichnet wird, und die Ver- und Entschlüsselungsparameter. Alle Authentifizierungsparameter sind einmalig und einer Mobilstation MS zugeordnet. Die Zufallszahl und die individuelle Antwort SRES werden nur jeweils einmal für einen Authentifizierungsvorgang benutzt und die im Authentifikationszentrum AC erzeugte individuelle Antwort SRES wird in der Besucherdatei während der Authentizierung mit einer individuellen Antwort SRES verglichen, die in einem Identifikationsmodul SIM (Subscriber Identification Module) in der Mobilstation MS erzeugt wurde und zur Mobil-Vermittlungsstelle MSC übertragen wurde.

Wie es in Fig. 2 dargestellt ist, bilden eine oder mehrere Funkzellen C eine Lokalisierungsfläche LA (Location Area). Eine Lokalisierungsfläche LA ist eine Servicefläche, in der sich ein Mobilfunkteilnehmer frei bewegen kann, ohne daß ein Lokalisierungsregister VLR oder HLR auf den neuesten Stand gebracht werden muß. Die Größe der Lokalisierungsfläche LA wird vom Netzbetreiber entsprechend den Erfordernissen des Verkehrsaufkommens und der Bewegungsdichte festgelegt.

Eine oder mehrere Lokalisierungsflächen LA bilden eine Besucherdatei-Fläche (Visitor Location Register Area) VLRA. Die Besucherdatei-Fläche VLRA kann die Größe eines Teils einer Stadt bis zur Größe eines ganzen Landes annehmen und sie ist derjenige Teil eines Netzes, der von einer Besucherdatei VLR unterstützt wird. Eine oder mehrere Besucherdatei-Fläche VLRA bilden ein Mobilfunknetz PLMN (Public Land Mobile Network), d.h. die geographische Servicefläche, in der ein Netzbetreiber seine Telekommunikationsdienste bereitstellt.

Infolge der Mobilität des Mobilfunkteilnehmers muß das Mobilfunknetz PLMN immer über den gegenwärtigen Aufenthalt eines Mobilfunkteilnehmers informiert sein. Die Besucherdatei VLR beinhaltet alle Informationen über diejenigen Mobilfunkteilnehmer, die sich gerade in derjenigen Besucherdatei-Fläche VLRA aufhalten, die sie überwacht. Um diese Information bereitzustellen, muß das Mobilfunknetz PLMN immer auf dem neuesten Stand des Aufenthalts eines jeden Mobilfunkteilnehmers, bzw. der Mobilstation MS sein.

Die Lokalisierungsidentifikation für die Besucherdatei VLR und die Heimatdatei HLR wird durch ein Leistungsmerkmal Lokalisierungs-Aktualisierung (Lokation Update) LU bereitgestellt. Eine normale Lokalisierungs-Aktualisierung LU wird von der Mobilstation MS veranlaßt, wenn
- der Mobilfunkteilnehmer die Grenze einer Lokalisierungsfläche LA überschreitet,
- die Mobilstation MS eingeschaltet wird und die in der Mobilstation MS gespeicherte Lokalisierungsidentifikation nicht dem gegenwärtigen Gebiet entspricht ,
- die internationale Identifizierung (International Mobile Subscriber Identity) IMSI in der Besucherdatei VLR unbekannt ist, oder
- die Mobilstation MS die letzte gespeicherte Lokalisierungsidentifikation verloren hat.

Weiterhin wird eine periodische Lokalisierungs-Aktualisierung LU von der Mobilstation MS in regelmäßig wiederkehrenden Abständen durchgeführt. Eine derartige Lokalisierungs-Aktualisierung LU kann umfassen:
- nur die Besucherdatei VLR, wenn die Mobilstation MS eine Lokalisierungs-Aktualisierung LU veranlaßt innerhalb einer Besucherdatei-Fläche VLRA, die von einer Besucherdatei VLR überwacht wird und die Adresse der Besucherdatei VLR nicht der Heimatdatei HLR mitgeteilt werden muß, da sie sich nicht geändert hat, oder
- die Besucherdatei VLR und die Heimatdatei HLR, wenn die Mobilstation MS eine Lokalisierungs-Aktualisierung LU in einem neuen Besucherdatei-Fläche VLRA veranlaßt.

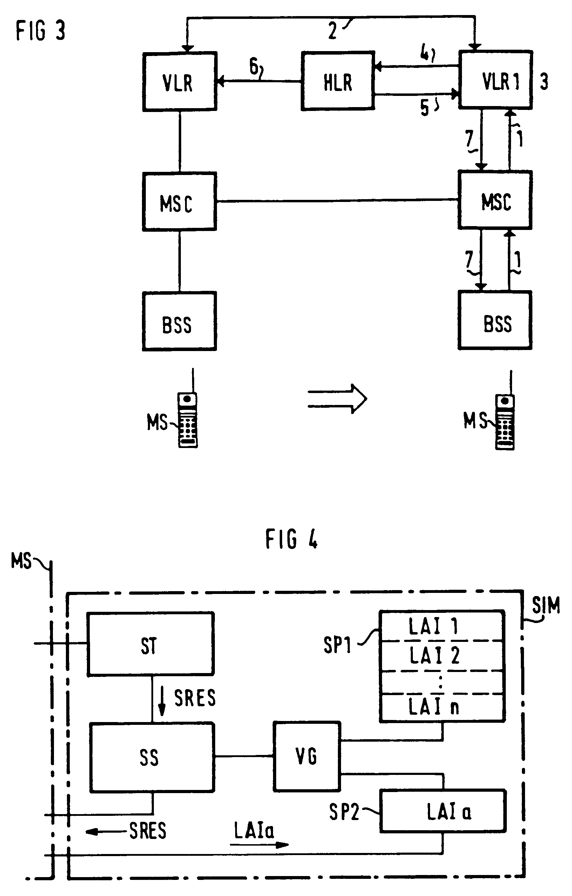

Die Fig. 3 zeigt, wie eine Heimatdatei HLR über einen Wechsel der Besucherdatei-Fläche VLRA des Mobilfunkteilnehmers informiert wird.

In einer Phase 1 identifiziert sich der Mobilfunkteilnehmer unter Verwendung einer gespeicherten Lokalisierungsidentität (Lokation Area Identity) LAI und einer temporären Identität (Temporary Mobile Subscriber Identity) TMSI. Die neue Besucherdatei VLR1 erkennt, daß die alte Lokalisierungsidentität LAI nicht zu der neuen Besucherdatei-Fläche VLRA1 gehört. Die neue Besucherdatei VLR1 erzeugt unter Verwendung einer lokalen Identität (Local Mobile Subscriber Identity) LMSI für den Mobilfunkteilnehmer einen neuen Eintrag in ihre Datenbank. Die neue Besucherdatei VLR1 fordert in der Phase 2 unter Verwendung der temporären Identität TMSI von der alten Besucherdatei VLR die internationale Identifizierung IMSI des Mobilfunkteilnehmers an. Dies ist möglich, da die alte Besucherdatei VLR die Beziehung zwischen der internationalen Identifizierung IMSI und der temporären Identität TMSI kennt. In der Phase 3 führt die neue Besucherdatei VLR1 die Authentifizierung des Mobilfunkteilnehmers durch. Hierzu vergleicht die neue Besucherdatei VLR1 eine im Authentifikationszentrum AC erzeugte individuelle Antwort SRES mit einer in der Mobilstation MS erzeugten individuellen Antwort SRES. Die neue Besucherdatei VLR1 fordert in der Phase 4 von der Heimatdatei HLR des Mobilfunkteilnehmers dessen Daten unter Verwendung der internationalen Identifizierung IMSI, der Adresse der Besucherdatei VLR1 und der lokalen Identität LMSI an und gibt ihre Adresse der Heimatdatei HLR bekannt. Die Heimatdatei HLR sendet alle relevanten Daten des Mobilfunkteilnehmers zur neuen Besucherdatei VLR1 (Phase 5). Die Heimatdatei HLR löscht dann alle den Mobilfunkteilnehmer betreffenden Daten in der alten Besucherdatei VLR (Phase 6), und die neue Besucherdatei VLR1 ordnet dem Mobilfunkteilnehmer eine neue temporäre Identität TMSI zu (Phase 7).

Falls der Mobilfunkteilnehmer nur einen auf eine oder mehrere Lokalisierungsflächen LA1 bis LAn beschränkten Zugriff zum Mobilfunksystem haben soll, wird dies bei der Authentifizierung (Phase 3) festgestellt. Falls der Mobilfunkteilnehmer nicht berechtigt ist, wird er von der neuen Besucherdatei VLR1 abgewiesen. Entsprechendes wie für die Lokalisierungs-Aktualisierung gilt auch für andere Dienstanforderungen (Service Request), wie beispielsweise für einen von der Mobilstation MS ausgehenden oder einen an dieser ankommenden Ruf (Mobile Originating and Mobile Terminating Call) oder für eine von der Mobilstation MS ausgeführte Eingabe (Subscriber Controlled Input). In jedem dieser Fälle wird eine Authentifizierung der Mobilstation MS durchgeführt.

Die Fig. 4 zeigt als Identifikationsmodul eine in der Mobilstation MS vorgesehene Berechtigungskarte SIM (Subscriber Identification Module). Sie enthält in an sich bekannter Weise eine Steuereinheit S1 für die Durchführung des Authentifizierungsalgorithmus, die an ihrem Ausgang nach dem Authentifizierungsvorgang die individuelle Antwort SRES abgibt. Zusätzlich enthält die Berechtigungskarte SIM einen ersten Speicher SP1, in dem die Lokalisierungsidentifikationen LAI1 bis LAIn für die zugelassenen Lokalisierungsflächen LA1 bis LAn gespeichert sind. Dieser Speicherinhalt ist vom Mobilfunkteilnehmer nicht überschreibbar. Vor jeder Authentifizierung wird die aktuelle Lokalisierungsidentifikation LAIa auf die Berechtigungskarte SIM (Subscriber Identification Module) übertragen. Sie wird dort in einem Speicher SP2 gespeichert. Zusätzlich zum normalen Authentifizierungsvorgang wird dann die aktuelle Lokalisierungsidentifikation LAIa mit den im Speicher SP1 gespeicherten Lokalisierungsidentifikationen LAI1 bis LAIn verglichen. Hierzu ist ein Vergleicher VG vorgesehen. Der Ausgang des Vergleichers VG ist mit einer Schaltstufe SS verbunden, die bei Übereinstimmung die individuelle Antwort SRES unverändert an die eigentliche Mobilstation MS und über diese an die Vermittlungsstelle SSS abgibt. Falls die aktuelle Lokalisierungsidentifikation LAIa mit keiner der gespeicherten Lokalisierungsidentifikationen LAI1 bis LAIn übereinstimmt, ändert der Vergleicher VG über die Schaltstufe SS die individuelle Antwort SRES derart ab, daß sie von der Vermittlungsstelle SSS als falsch angesehen wird und damit der Zugang zu der neuen Lokalisierungsfläche LA gesperrt wird. Für die Beschränkung der Mobilität sind damit keine Änderungen in den Mobilstationen MS, in den Basisstationen BSS oder in der Vermittlungsstelle SSS erforderlich. Die falsche individuelle Antwort SRES verhindert somit die korrekte Authentifizierung, sobald der Mobilfunkteilnehmer seinen erlaubten Aufenthaltsbereich verläßt.

Die Speicher SP1 und SP2, sowie der Vergleicher VG und die Schaltstufe SS werden vorzugsweise durch einen Mikrorechner realisiert, der deren Funktionen ausführt. Der Mikrorechner kann auch die Funktion der Authentifizierung und damit der Erzeugung der individuellen Antwort SRES übernehmen.

Die Speicher SP1 und SP2 und insbesondere der Vergleicher VG können auch in der Mobilstation MS vorgesehen sein. Zweckmäßigerweise würde die Authentifizierung weiterhin auf der Berechtigungskarte SIM verbleiben und die gegebenenfalls vorzunehmende Abänderung der individuellen Antwort SRES würde durch die Schaltstufe SS auf der Berechtigungsstufe SIM erfolgen.

## Patentansprüche

1. Verfahren zum Beschränken des Zugriffs von Mobilstationen (MS) zu einem Mobilfunksystem mit einer Mehrzahl von Mobilstationen (MS) und mindestens einer Zentralstation, wobei das gesamte Funkgebiet des Mobilfunksystems eine Mehrzahl von aus jeweils einer oder mehreren Funkzellen (C) gebildeten Lokalisierungsflächen (LA) aufweist und wobei bei einer Dienstanforderung durch die Mobilstation (MS) eine Authentifizierung der Mobilstation (MS) mittels eines in der Mobilstation (MS) vorgesehenen Identifikationsmoduls (SIM) erfolgt,
**dadurch gekennzeichnet,**
daß eine die jeweilige Lokalisierungsfläche (LA) kennzeichnende, in einer Zentralstation gespeicherte, aktuelle Lokalisierungsidentifikation (LAIa) zur Mobilstation (MS) übertragen und gespeichert wird, daß in dem Identifikationsmodul (SIM) mindestens eine Lokalisierungsidentifikation (LAI) von mindestens einer für die Mobilstation (MS) zugelassenen Lokalisierungsfläche (LA) gespeichert ist, und daß die aktuelle Lokalisierungsidentifikation (LAIa) mit der dort gespeicherten mindestens einen Lokalisierungsidentifikation (LAI) verglichen wird und ein Zugriff der Mobilstation (MS) zum Mobilfunksystem gesperrt wird, wenn die aktuelle Lokalisierungsidentifikation (LAIa) nicht mit einer gespeicherten Lokalisierungsidentifikation (LAI) übereinstimmt.

2. Verfahren nach Anspruch 1, bei dem die Authentifizierung durch eine vom Identifikationsmodul (SIM) erzeugte individuelle Antwort (SRES) erfolgt,
**dadurch gekennzeichnet,**
daß die erzeugte individuelle Antwort (SRES) abgeändert wird, wenn eine gespeicherte Lokalisierungsidentifikation (LAI) nicht mit der aktuellen Lokalisierungsidentifikation (LAIa) übereinstimmt.

3. Verfahren nach Anspruch 1 oder Anspruch 2,
**dadurch gekennzeichnet,**
daß der Vergleich während der Authentifizierung der Mobilstation erfolgt.

4. Verfahren nach einem der vorangehenden Ansprüche,
**dadurch gekennzeichnet,**
daß das Speichern, Vergleichen und Sperren mikrorechnergesteuert erfolgen.

5. Mobilstation mit beschränkter Zugriffsberechtigung zu einem Mobilfunksystem mit einer Mehrzahl von Mobilstationen (MS) und mindestens einer Zentralstation, wobei das gesamte Funkgebiet des Mobilfunksystems eine Mehrzahl von aus jeweils einer oder mehreren Funkzellen (C) gebildeten Lokalisierungsflächen (LA) aufweist und wobei bei einer Dienstanforderung durch die Mobilstation (MS) eine Authentifizierung der Mobilstationen (MS) mittels eines dort vorgesehenen Identifikationsmoduls (SIM) erfolgt,
**gekennzeichnet**
durch einen ersten Speicher (SP1), in dem eine in einer Zentralstation gespeicherte, zur Mobilstation (MS) übertragene, die jeweilige Lokalisierungsfläche (LA) kennzeichnende aktuelle Lokalisierungsidentifikation (LAIa) speicherbar ist, durch einen zweiten Speicher (SP2), in dem mindestens eine Lokalisierungsidentifikation (LAI) mindestens einer für die Mobilstation (MS) zugelassenen Lokalisierungsfläche (LA) gespeichert ist, und durch einen Vergleicher (VG) der die aktuelle Lokalisierungsidentifikation (LAIa) mit der jeweils im zweiten Speicher (SP2) gespeicherten mindestens einen Lokalisierungidentifikation (LAI) vergleicht und den Zugriff zum Mobilfunksystem sperrt, wenn die aktuelle Lokalisierungsidentifikation (LAIa) nicht mit einer gespeicherten Lokalisierungsidentifikation (LAI) übereinstimmt.

6. Mobilstation nach Anspruch 5,
**dadurch gekennzeichnet**,
daß der Speicher (SP1), der weitere Speicher (SP2) und der Vergleicher (VG) Bestandteile einer Berechtigungskarte (SIM) sind.

7. Mobilstation nach Anspruch 5 oder Anspruch 6, bei dem die Authentifizierung durch eine in einem Identifikationsmodul (SIM) erzeugte Datenfolge (SRES) erfolgt,
**dadurch gekennzeichnet,**
daß eine Schaltstufe (SS) vorgesehen ist, die die Datenfolge (SRES) abändert, wenn die aktuelle Lokalisierungsidentifikation (LAIa) nicht mit einer gespeicherten Lokalisierungsidentifikation (SI) übereinstimmt.

8. Mobilstation nach einem der Ansprüche 5 bis 7,
**dadurch gekennzeichnet**,
daß der Speicher (SP1), der zweite Speicher (SP2) und der Vergleicher (VG) Bestandteile eines Mikrorechners sind.

9. Berechtigungskarte für eine Zugriffsberechtigung zu einem Mobilfunksystem mit einer Mehrzahl von Mobilstationen und mindestens einer Zentralstation, wobei das gesamte Funkgebiet des Mobilfunksystems eine Mehrzahl von aus jeweils einer oder mehreren Funkzellen gebildeten Lokalisierungsflächen (LA) aufweist und wobei bei einer Dienstanforderung durch die Mobilstation (MS) eine Authentifizierung der Mobilstation (MS) mittels der Berechtigungskarte (SIM) erfolgt,
**dadurch gekennzeichnet,**
daß die Berechtigungskarte (SIM) mit einem Speicher (SP1), in dem eine die jeweilige Lokalisierungsfläche (LA) kennzeichnende, von einer Zentralstation empfangene aktuelle Lokalisierungsidentifikation (LAIa) speicherbar ist, einem zweiten Speicher (SP2), in dem mindestens eine Lokalisierungsidentifikation (LAI) mindestens einer für die Mobilstation (MS) zugelassenen Lokalisierungsfläche (LA) gespeichert ist, und einem Vergleicher (VG) versehen ist, der die aktuelle Lokalisierungsidentifikation (LAIa) mit der jeweils im zweiten Speicher (SP2) gespeicherten mindestens einen Lokalisierungsidentifikation (LAI) vergleicht und ein Signal erzeugt, das den Zugriff zum Mobilfunksystem sperrt, wenn die aktuelle Lokalisierungsidentifikation (LAIa) nicht mit einer gespeicherten Lokalisierungsidentifikation (LAI) übereinstimmt.

10. Berechtigungskarte nach Anspruch 9,
**dadurch gekennzeichnet,**
daß der Speicher (SP1), der zweite Speicher (SP2) und der Vergleicher (VG) Bestandteile eines Mikrorechners sind.

11. Berechtigungskarte nach Anspruch 9 oder Anspruch 10, bei dem die Authentifizierung durch eine von einem Identifikationsmodul (SIM) erzeugte Datenfolge (SRES) erfolgt,
**dadurch gekennzeichnet**,
daß eine Schaltstufe (SS) vorgesehen ist, die die Datenfolge (SRES) abändert.

12. Berechtigungskarte nach einem der Ansprüche 9 bis 11,
**dadurch gekennzeichnet**,
daß der Speicher (SP1), der weitere Speicher (SP2) und der Vergleicher (VG) Bestandteile eines Mikrorechners sind.
